# EUROPEAN PATENT APPLICATION

(11) **EP 3 401 181 A1**
(43) Date of publication of application: **14.11.2018**
(21) Application number: 18170654.0
(22) Date of filing: 03.05.2018
(51) Int. Cl.: B60W 30/06, G07C 9/00

(54) **ONBOARD AUTOMATIC PARKING SYSTEM FOR A VEHICLE**

(30) Priority: 09.05.2017 CN 201710320573
(71) Applicant: Valeo Comfort and Driving Assistance, 94046 Créteil Cedex (FR)
(72) Inventor: SCHULER, Stéphane, Shenzhen, Guangdong 518128 (CN)
(74) Representative: Delplanque, Arnaud

(57) **Abstract**

An onboard automatic parking system (10) for a vehicle (8) comprising:
an automatic parking unit (20) suited to control a maneuver of the vehicle (8) in or out of a park area (5);
a communication circuit (58) suited to send a wireless instruction for operating an access system (4) of the park area (5);
a human machine interface (56) suited to send a given instruction to the communication circuit (58) via a bus (40), the communication circuit (58) sending said wireless instruction upon receiving the given instruction,
a module (52) connected to said bus (40) and suited to command said automatic parking unit (20) to control said maneuver and to send said given instruction on said bus (40).

## Description

### TECHNICAL FIELD OF THE INVENTION

The invention relates to vehicles having an automatic maneuver capability and, more precisely, to an onboard automatic parking system for a vehicle.

### BACKGROUND INFORMATION AND PRIOR ART

It is known to provide vehicles with an automatic parking capability such that the vehicle may park without receiving any direction from the driver. Such a vehicle may have for instance an onboard system including an automatic parking unit adapted to control a maneuver of the vehicle in a garage.

Besides, in many regions around the world, it is quite common to possess a garage that is accessible through a remote controlled door. A remote control device is usually provided to trigger the opening of a garage door or a gate. Such access systems are generally known as GDO (for "Garage Door Opener") and the devices remotely controlling them UGDO (for "Universal Garage Door Opener").

### SUMMARY OF THE INVENTION

In this context, the invention provides an onboard automatic parking system for a vehicle comprising an automatic parking unit suited to control a maneuver of the vehicle in or out of a park area; a communication circuit suited to send a wireless instruction for operating an access system of the park area; a human machine interface (HMI) suited to send a given instruction to the communication circuit via a bus, the communication circuit sending said wireless instruction upon receiving the given instruction; and a module connected to said bus and suited to command said automatic parking unit to control said maneuver and to send said given instruction on said bus.

By sending the given instruction on the bus, the module is capable of triggering the sending of the wireless instruction by the communication circuit. It is thus provided in a simple manner, for instance using existing communication circuit and bus, a module that is capable of controlling both the maneuver and the operation of the access system.

For clarity, the access system may be for instance a garage door, a gate, a barrier or a lift, that needs to be operated while maneuvering the car.

The following optional (and thusnot exhaustive) features are also proposed:
- the communication circuit is suited to transmit the wireless instruction by generating a radiofrequency signal below 1 GHz;
- the HMI mentioned above is a button;
- the onboard automatic parking system comprises a further communication circuit suited to establish a wireless communication with an electronic device;
- the module is suited to receive, via said wireless communication, data confirming detection of a user action on the electronic device;
- the module is suited to command the automatic parking unit to control the maneuver subsequent to actuation of an element of another human machine interface;
- the automatic parking unit includes at least one sensor for acquiring data relating to the vehicle environment;
- the automatic parking unit includes a processing circuit for processing data acquired by the sensor;
- the automatic parking unit includes a control circuit for controlling a vehicle motion control mechanism based on the processed data.

Other features and advantages of the embodiments of the present invention will be better understood upon reading of preferred embodiments thereof with reference to the appended drawings.

### BRIEF DESCRIPTION OF THE DRAWINGS

Figure 1 shows a first possible context of implementation of the invention.
Figure 2 shows an example of an onboard system used in the context of Figure 1.
Figure 3 shows a second possible context of implementation of the invention.
Figure 4 shows an example of an onboard system used in the context of Figure 3.

### DETAILED DESCRIPTION OF EXAMPLE(S)

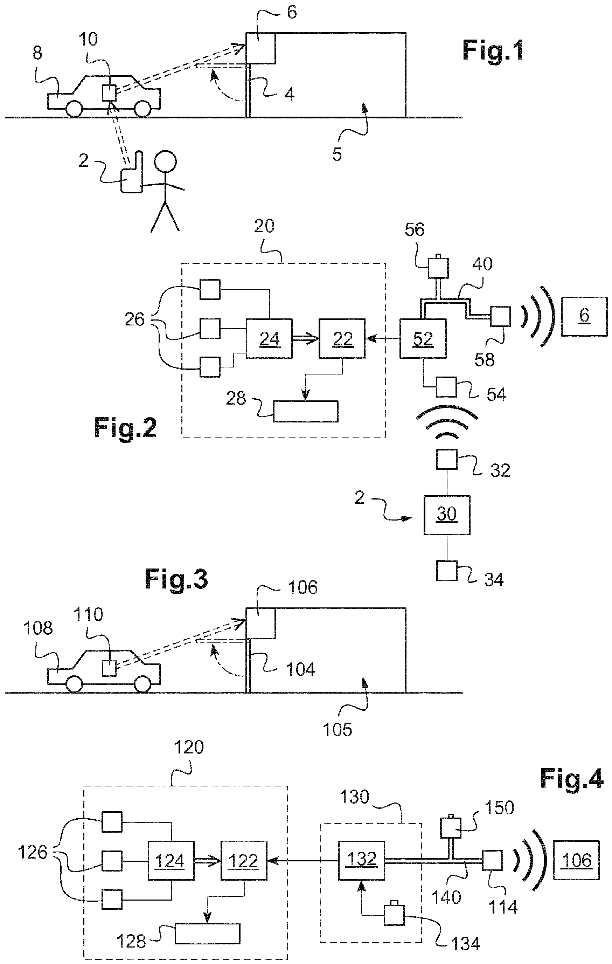

Figure 1 shows a first possible context in which the invention may be used.

In this context, a vehicle 8 is about to enter a park area 5 (here a garage) secured by an access system 4 (here a garage door).

A mechanism 6 for operating the access system 4 (here for opening or closing the garage door) can be remotely controlled, *i.e.* operated when receiving a wireless instruction provided it has received valid credentials.

The vehicle 8 is equipped with an automatic parking unit 20 capable of maneuvering the vehicle 8 into the park area 5 provided a user action is (continuously) detected on an electronic device 2, here the user's smartphone.

The operation of the access system 4 (here the opening of the garage door) is triggered, preferably synchronously to the vehicle maneuver, by a module 52 of the vehicle onboard system 10.

Figure 2 shows an arrangement usable in the context of Figure 1.

According to this possible solution, the vehicle onboard system 10 comprises the automatic parking unit 20, an electronic control module 52, a data communication circuit 54, a button 56 (forming a human-machine interface or HMI) and a radio communication circuit 58.

The button 56 and the radio communication circuit 58 are connected via a bus 40. When the user depresses the button 56, an actuation instruction is transmitted on the bus 40. Upon detecting this actuation instruction on the bus 40, the radio communication circuit 58 generates a sub GHz radiofrequency signal (*i.e.* a radiofrequency signal having a main frequency below 1 GHz) intended to operating the mechanism 6 (and corresponding to the wireless instruction), as well as credentials mentioned above.

The mechanism 6 is designed to operate the access system 4 (here to open the garage door) when receiving the radiofrequency signal with correct credentials.

Thus, activation of the button 56 by the user leads to operating the access system 4 of the park area 5.

The electronic device 2 (which is for instance a smartphone) comprises a control unit 30 (such as a microcontroller), a data communication circuit 32 and a human-machine interface (HMI) or user interface 34 (here a touch screen).

The data communication circuit 32 of the electronic device 2 and the data communication circuit 54 in the vehicle can establish a wireless communication, for instance a Bluetooth communication or a communication in a wireless local area network (WLAN).

When the control unit 30 detects a pre-defined user action on the user interface 34, the control unit 30 instructs the data communication circuit 32 to send data confirming detection of this pre-defined user action to the data communication circuit 14 of the vehicle.

The electronic control module 52 can thus receive these data via the data communication circuit 54.

As long as a user action is detected on the electronic device 2 (*i.e.* as long as the electronic control module 52 receives the data confirming user action), the electronic control module 52 commands and/or monitors said maneuver by transmitting a corresponding instruction to the automatic parking unit 20.

### (Operation of the automatic parking 20 unit is described below.)

Should however the user fail to perform the predefined user action on the user interface 34, the electronic control module 52 would no longer receive the data confirming the user action and would then instruct the automatic parking unit 20 to stop the maneuver.

Back to the situation where the user continuously interacts with the user interface 34 of the electronic device 2, at a point in time during the maneuver (*i.e.* synchronously to the maneuver), the electronic control module 52 transmits the actuation instruction (identical to the instruction provided by button 56 upon being depressed) on the bus 40, which actuation is received by the radio communication circuit 58. The radio communication circuit 58 thus emits the radiofrequency signal, which results, as explained above, in the mechanism 6 operating the access system 4 (here opening the garage door), making it possible for the vehicle to clear the access system 4.

The transmission of the radiofrequency signal by the radio communication circuit 58 may be precisely synchronized with the maneuver. In this goal, the automatic parking unit 20 may for instance be suited to compute an appropriate time to operate the access system 4 (possibly taking into account the time needed to operate the access system 4) and to communicate said appropriate time to the electronic control module 52 such that the electronic control module 52 may control operation of the access system 4 (by transmitting the actuation instruction on the bus 40) at said appropriate time.

Thus, a conventional mechanism 6 triggered by a sub Ghz radiofrequency signal can be activated synchronously while the automatic parking maneuver is taking place.

As already mentioned, the access system 4 is here a garage door. According to a possible variation, the access system could be an elevator making it possible for the vehicle to access the park area. It could also be an area closed by a gate or barrier.

Once the access system 4 is operated, the electronic control module 52 can then further command and monitor the automatic parking unit 20 to drive the vehicle 8, passing the cleared access system 4 and into the park area 5.

Figure 3 shows a second possible context in which the invention may be used.

In this context, a vehicle 108 is about to enter a park area 105 (here a garage) secured by an access system 104 (here a garage door).

A mechanism 106 for operating (*e.g.* opening or closing) the access system 104 (here for opening or closing the garage door) can be remotely controlled, *i.e.* activated when receiving a wireless instruction.

The vehicle 108 is equipped with an automatic parking unit 120 suited to maneuver the vehicle 108 into the park area 105 after a pre-defined user action is detected on a human machine interface (HMI) 130.

The same human machine interface 130 is suited to command a communication circuit 114 to send the above-mentioned wireless instruction upon actuation of an element 134 of the human machine interface 130, thereby triggering operation (*e.g.* opening) of the access system 104.

As already mentioned, the access system 104 is here a garage door. According to a possible variation, the access system 104 could be an elevator making it possible for the vehicle to access the park area.

In addition, in another possible context, the communication circuit 114 could also send a wireless instruction to control a comfort equipment (e.g. a garage lighting) associated with the access system (or, in another embodiment, independent of the access system).

According to the embodiment schematically represented in Figure 4, the vehicle onboard system 110 comprises the automatic parking unit 120, the human machine interface 130, a button 150 and a radio communication circuit 114.

The button 150 and the radio communication circuit 114 are connected via a bus 140. When the user depresses the button 150, an actuation instruction is transmitted on the bus 140. Upon detecting this actuation instruction on the bus 140, the radio communication circuit 114 generates a sub GHz radiofrequency signal (*i.e.* a radiofrequency signal having a main frequency below 1 GHz) intended for the mechanism 106 (and corresponding to the wireless instruction mentioned above).

The mechanism 106 is designed to operate the access system 104 (here to open the garage door) when receiving the radiofrequency signal.

Thus, actuation of the button 150 by the user results in operating the access system 104 of the park area 105.

The human machine interface 130 comprises a control module 132 and an (actuatable) element 134. The actuatable element 134 is here a (push) button, but could be another type of mechanical knob, or a virtual button on a touchscreen.

The human machine interface 130 (and precisely here the control module 132) is connected to the bus 140.

Upon actuation of the element 134 of the human machine interface 130 by the user, an actuation signal is received at the control module 132.

The control module 132 of the human machine interface 130 then sends the above-mentioned actuation instruction on the bus 140 and commands the automatic parking unit 120 to perform an automatic maneuver into the park area 105 (as further explained below).

Precisely, the control module 132 of the human machine interface 130 sends a request to a control unit 122 of the automatic parking unit 120 to start the automatic parking procedure. Further operation of the automatic parking unit 120 is described below.

In parallel (*i.e.* here contemporaneously), the actuation instruction sent by the control module 132 on the bus 140 is received (detected) by the radio communication circuit 114, so that the radio communication circuit 114 generates a (here sub GHz) radiofrequency signal intended to the mechanism 106 (in a similar fashion as when button 150 is depressed, as explained above).

Upon receiving the radiofrequency signal (in practice: together with correct credentials), the mechanism 106 operates (here: opens) the access system 104 (here the garage door), which enables the vehicle 108 to maneuver into the park area 105 (under the control of the automatic parking unit 120).

According to a possible implementation, transmission of the radiofrequency signal is synchronized with the maneuver. In this goal, the automatic parking unit 120 may for instance be suited to determine an appropriate time to operate the access system 104 (possibly taking into account the time needed to operate the access system) and to communicate said appropriate time to (the control module 132 of) the human machine interface 130 such that (the control module 132 of) the human machine interface 130 may send the actuation instruction on the bus 140 (and thus control operation of the access system 104) at said appropriate time.

Operation of the automatic parking unit 20; 120 is now described.

The automatic parking unit 20; 120 comprises at least one sensor 26; 126 (generally a plurality of sensors), a processing circuit 24; 124, a control circuit 22; 122 and at least a vehicle motion control mechanism 28; 128 (such as a power train and/or a steering system and/or a braking system).

Each sensor 26; 126 (for instance a video camera or an ultrasonic sensor) captures data representative of the environment of the vehicle 8; 108.

The processing circuit 24; 124 processes (*e.g.* analyzes) the (raw) data captured by the sensor(s) 26; 126 to generate processed data, which also incorporates the vehicle 8; 108 environment, but in a more synthetic manner. The processed data contains for instance the location of detected objects in the environment of the vehicle 8; 108.

The control circuit 22; 122 receives these processed data and a command from the electronic control module 52 or the human machine interface 130.

When the command received from the electronic control module 52 or human machine interface 130 indicates the automatic maneuver should proceed, the control circuit 22; 122 controls the vehicle motion control mechanism(s) 28; 128 based on the processed data so as to drive the vehicle 8; 108 in its environment.

When the command received from the electronic control module 52 or human machine interface 130 indicates the automatic maneuver should be stopped, the control circuit 22; 122 controls the vehicle motion control mechanism(s) 28; 128 to halt the vehicle 8; 108.

The examples described here involve a vehicle entering into a park area. The invention is however not limited to this situation and also applies in particular to the case of a vehicle maneuvering out of a park area.

## Claims

1. An onboard automatic parking system (10; 110) for a vehicle (8; 108) comprising:
an automatic parking unit (20; 120) suited to control a maneuver of the vehicle (8; 108) in or out of a park area (5; 105);
a communication circuit (58; 114) suited to send a wireless instruction for operating an access system of the park area (5; 105);
a human machine interface (56; 150) suited to send a given instruction to the communication circuit (58; 114) via a bus (40; 140), the communication circuit (58; 114) sending said wireless instruction upon receiving the given instruction; and
a module (52; 132) connected to said bus (40; 140) and suited to command said automatic parking unit (20; 120) to control said maneuver and to send said given instruction on said bus (40; 140).

2. The onboard automatic parking system according to claim 1, wherein the communication circuit (58; 114) is suited to transmit the wireless instruction by generating a radiofrequency signal below 1 GHz

3. The onboard automatic parking system according to claim 1 or 2, wherein said human machine interface is a button (56 ; 150).

4. The onboard automatic parking system according to any of claims 1 to 3, comprising a further communication circuit (54) suited to establish a wireless communication with an electronic device (2).

5. The onboard automatic parking system according to claim 4, wherein the module (52) is suited to receive, via said wireless communication, data confirming detection of a user action on the electronic device (2).

6. The onboard automatic parking system according to any of claims 1 to 3, wherein the module (132) is suited to command the automatic parking unit (120) to control the maneuver subsequent to actuation of an element (134) of another human machine interface (130).

7. The onboard automatic parking system according to any of claims 1 to 6, wherein the automatic parking unit (20; 120) includes at least one sensor (26; 126) for acquiring data relating to the vehicle environment, a processing circuit (24; 124) for processing data acquired by the sensor (26; 126) and a control circuit (22; 122) for controlling a vehicle motion control mechanism (28; 128) based on the processed data.
